# FASCICULE DE BREVET EUROPEEN

(11) **EP 3 105 066 B1**
(45) Date de publication et mention de la délivrance du brevet: **07.02.2018**
(21) Numéro de dépôt: 14814693.9
(22) Date de dépôt: 09.12.2014
(51) Int. Cl.: B60C 1/00, C08C 19/44, C08C 19/25, C08L 15/00, C08C 19/22

(54) **BANDE DE ROULEMENT DE PNEUMATIQUE**
REIFENLAUFFLÄCHE
TYRE TREAD

(30) Priorité: 10.12.2013 FR 1362332
(43) Date de publication de la demande: 21.12.2016
(73) Titulaire: Compagnie Générale des Etablissements Michelin, 63000 Clermont-Ferrand (FR)
(72) Inventeur: LABRUNIE, Philippe, F-63040 CLERMONT-FERRAND Cedex 9 (FR); DE GAUDEMARIS, Benoît, F-63040 CLERMONT-FERRAND Cedex 9 (FR)
(74) Mandataire: Wroblewski, Nicolas Paul André
(86) Numéro de dépôt international: PCT/EP2014/077027
(87) Numéro de publication internationale: WO 2015/086586

(56) Documents cités:
- WO-A1-2012/069567
- WO-A1-2012/076456
- WO-A1-2013/092096
- FR-A1- 2 930 554

## Description

Le domaine de l'invention est celui des compositions de caoutchouc pour pneumatiques, plus précisément des compositions de caoutchouc pour bande de roulement.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (*Highly Dispersible Silica*), capables de rivaliser, du point de vue du pouvoir renforçant, avec les noirs de carbone conventionnels de grade pneumatique.

L'utilisation de forts taux de silice et de plastifiant dans une composition de caoutchouc faiblement hystérétique à base d'élastomère diénique fonctionnel et interactif vis-à-vis de la silice est décrite dans la demande de brevet WO 2012/069567. Une telle composition de caoutchouc permet de conférer à un pneumatique qui contient une bande de roulement comprenant une telle composition de caoutchouc un compromis amélioré vis-à-vis de la résistance au roulement et de l'adhérence sur sol mouillé. En contrepartie, l'utilisation d'une composition de caoutchouc faiblement hystérétique peut s'accompagner d'une réduction de la performance d'adhérence sur sol sec, puisque le potentiel hystérétique de la composition de caoutchouc a été diminué. C'est pourquoi l'amélioration des propriétés d'adhérence, autant sur sol sec que sur sol mouillé des pneumatiques à faible résistance au roulement reste une préoccupation constante des concepteurs de pneumatiques.

Poursuivant leurs recherches, les Demanderesses ont découvert de façon inattendue que le choix spécifique d'un élastomère fonctionnel et interactif vis-à-vis de la silice, d'une certaine quantité de silice associé à un choix spécifique du système plastifiant permet d'obtenir un compromis de performances amélioré vis-à-vis de l'adhérence sur sol sec et de l'adhérence sur sol mouillé d'un pneumatique à faible résistance au roulement.

Ainsi l'invention a pour objet une bande de roulement de pneumatique qui comporte une composition de caoutchouc à base d'au moins :
- une matrice élastomère comprenant plus de 50% en masse d'un premier élastomère diénique qui porte une fonction silanol et une fonction amine pendante;
- une silice présente à un taux compris entre 120 et 140 pce ;
- un agent de couplage ;
- un système plastifiant comprenant :
   - selon une teneur A allant de 5 à 60 pce une résine hydrocarbonée présentant une Tg supérieure à 20°C ;
   - selon une teneur B allant de 0 à 60 pce un agent plastifiant liquide ;
   - étant entendu que le taux total A+B est au moins égal à 60 pce, de préférence de 60 à 90 pce.

L'invention a aussi pour objet un pneumatique qui comporte une bande de roulement telle que définie ci-dessus.

L'invention a aussi pour objet un procédé pour préparer une bande de roulement conforme à l'invention.

Les pneumatiques de l'invention sont particulièrement destinés à équiper des véhicules à moteur de type tourisme, incluant les véhicules 4x4 (à quatre roues motrices) et véhicules SUV (*"Sport Utility Vehicles"*), ainsi que des véhicules deux roues (notamment motos).

L'invention ainsi que ses avantages seront aisément compris à la lumière de la description et des exemples de réalisation qui suivent.

### I- DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties de la matrice élastomère qui consiste en la totalité des élastomères présents dans la composition de caoutchouc. Toutes les valeurs de température de transition vitreuse « Tg » sont mesurées de manière connue par DSC (Differential Scanning Calorimetry) selon la norme ASTM D3418 (1999).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### 1-1. Elastomère diénique

Par élastomère (ou indistinctement "caoutchouc", les deux termes étant considérés comme synonymes) du type "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle s'applique à tout type d'élastomère diénique, l'homme du métier du pneumatique comprendra que l'invention est de préférence mise en oeuvre avec des élastomères diéniques essentiellement insaturés.

Ces définitions étant données, on entend notamment par élastomère diénique susceptible d'être mis en oeuvre dans les compositions conformes à l'invention :
(a) - tout homopolymère obtenu par polymérisation d'un monomère diène conjugué, ayant de préférence de 4 à 12 atomes de carbone ;
(b) - tout copolymère obtenu par copolymérisation d'un ou plusieurs diènes conjugués entre eux ou avec un ou plusieurs composés vinyle aromatique ayant de préférence de 8 à 20 atomes de carbone.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Selon un mode de réalisation de l'invention, le premier élastomère diénique est un SBR, préférentiellement un SBR solution.

Selon ce mode réalisation de l'invention, la température de transition vitreuse, Tg, du copolymère de diène et de vinylaromatique, en particulier styrène, est avantageusement comprise entre -55° et -40°C.

De façon générale, une fonction portée par un élastomère diénique peut être située sur la chaîne élastomère soit en extrémité de chaîne soit à l'intérieur de la chaine (c'est-à-dire en dehors des extrémités de chaîne). Le premier cas se présente par exemple lorsque l'élastomère diénique est préparé en utilisant un amorceur de polymérisation portant la fonction ou en utilisant un agent de fonctionnalisation. Le deuxième cas se présente par exemple lorsque l'élastomère diénique est modifié par l'utilisation d'un agent de couplage ou d'étoilage portant la fonction.

Selon un mode de réalisation préférentiel de l'invention, la fonction silanol et la fonction amine pendante sont situées en dehors des extrémités de chaîne du premier élastomère diénique.

La fonction amine portée par le premier élastomère diénique est un groupe pendant. La position pendante de la fonction amine signifie de manière connue que l'atome d'azote de la fonction amine ne s'intercale pas entre les liaisons carbone-carbone de la chaîne élastomère du premier élastomère diénique.

Selon une première variante de l'invention, la fonction silanol portée par le premier élastomère diénique est un groupe pendant, ce qui revient à dire que l'atome de silicium de la fonction silanol ne s'intercale pas entre les liaisons carbone-carbone de la chaîne élastomère du premier élastomère diénique. Un élastomère diénique portant une fonction pendante silanol peut par exemple être préparé par hydrosilylation de la chaîne élastomère par un silane portant un groupement alcoxysilane, suivie d'une hydrolyse de la fonction alcoxysilane en fonction silanol.

Selon une deuxième variante de l'invention, la fonction silanol portée par le premier élastomère diénique n'est pas un groupe pendant, mais est située dans la chaîne élastomère, ce qui revient à dire que l'atome de silicium de la fonction silanol s'intercale entre les liaisons carbone-carbone de la chaîne élastomère du premier élastomère diénique. Un tel élastomère diénique peut être préparé par réaction de couplage des chaînes élastomères avec un agent de couplage portant une fonction alcoxysilane et une fonction amine, suivie d'une hydrolyse de la fonction alcoxysilane en fonction silanol. Comme agent de couplage conviennent par exemple les N,N-dialkylaminopropyltrialcoxysilanes, les groupements dialkyles étant en C1-C10, de préférence en C1-C4, les composés 3-(N,N-diméthylaminopropyl)triméthoxysilane, le 3-(N,N-diméthylaminopropyl)triéthoxysilane, le 3-(N,N-diéthylaminopropyl)triméthoxysilane, le 3-(N,N-diéthylaminopropyl)triéthoxysilane étant plus particulièrement préférés quel que soit le mode de réalisation de l'invention. Cette deuxième variante est préférentielle et s'applique à l'un quelconque mode de réalisation de l'invention.

Selon la première ou la seconde variante, l'hydrolyse de la fonction alcoxysilane portée par un élastomère diénique en fonction silanol peut être conduite selon le mode opératoire décrit dans la demande de brevet EP 2 266 819 A1 ou bien par une étape de stripping de la solution contenant l'élastomère diénique.

Selon un mode de réalisation préférentiel de l'invention, la fonction amine est une amine tertiaire. A titre de fonction amine tertiaire, on peut citer les amines substituées par des radicaux alkyle en C1-C10, de préférence alkyle en C1-C4, plus préférentiellement un radical méthyle ou éthyle quel que soit le mode de réalisation de l'invention.

Selon un mode de réalisation particulièrement préférentiel de l'invention, le premier élastomère diénique est majoritairement sous une forme linéaire, c'est-à-dire que s'il comporte des chaînes étoilées ou branchées, celles-ci représentent une fraction pondérale minoritaire dans cet élastomère, c'est-à-dire que la quantité de chaînes étoilées et de chaînes branchées présentes dans le premier élastomère diénique est comprise dans un domaine allant de 0% à moins de 50% en masse du poids total du premier élastomère diénique.

Il est entendu que le premier élastomère diénique peut être constitué par un mélange d'élastomères qui se différencient des uns des autres par la nature chimique de la fonction amine, par leur microstructure ou encore par leur macrostructure.

Lorsque la matrice élastomère de la composition de la bande de roulement conforme à l'invention comporte un deuxième élastomère, ce deuxième élastomère est un élastomère diénique. Le deuxième élastomère diénique est différent du premier élastomère diénique en ce qu'il ne porte pas à la fois de fonction silanol et de fonction amine pendante. Néanmoins ce deuxième élastomère peut avoir une microstructure ou une macrostructure qui peuvent être identiques à ou différentes de celles du premier élastomère diénique. Il est utilisé dans une proportion comprise entre 0 et 50%, préférentiellement entre 0 et 25%, plus préférentiellement entre 0 et 10%. Autrement dit la matrice élastomère comprend plus de 50%, préférentiellement plus de 75%, plus préférentiellement plus de 90% en masse du premier élastomère diénique, le complément à 100% étant constitué par un deuxième élastomère diénique.

Le deuxième élastomère diénique peut être un polybutadiène, un caoutchouc naturel, un polyisoprène de synthèse, un copolymère de butadiène, un copolymère d'isoprène ou un mélange de ces élastomères.

### 1-2. Charge renforçante

Comme autre caractéristique essentielle, la composition de caoutchouc de la bande de roulement conforme à l'invention comprend entre 120 et 140 pce d'une silice.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387.

L'homme du métier comprendra qu'à titre de charge équivalente de silice décrite dans le présent paragraphe, pourrait être utilisée une charge renforçante d'une autre nature, notamment organique telle que du noir de carbone, dès lors que cette charge renforçante serait recouverte d'une silice. A titre d'exemple, on peut citer par exemple des noirs de carbone pour pneumatiques tels que décrits par exemple dans les documents brevet WO 96/37547, WO 99/28380.

Avantageusement le taux de silice est compris dans un domaine allant de 125 à 135 pce.

Selon un mode de réalisation de l'invention, la composition de caoutchouc de la bande de roulement conforme à l'invention, peut comporter du noir de carbone. Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la silice à l'élastomère diénique, on utilise de manière bien connue un agent de couplage, généralement un silane, (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 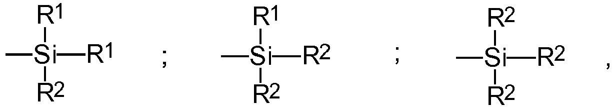
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemples d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de silice. Son taux est préférentiellement compris entre 0,5 et 15 pce, plus préférentiellement entre 3 et 12 pce. Ce taux est aisément ajusté par l'homme du métier selon le taux de silice utilisé dans la composition.

### .I-3. Système plastifiant :

Une autre caractéristique essentielle de la composition de caoutchouc de la bande de roulement conforme à l'invention est de comporter un système plastifiant spécifique, comprenant selon une teneur A allant de 5 à 60 pce une résine hydrocarbonée présentant une Tg supérieure à 20°C, et selon une teneur B allant de 0 à 60 pce un agent plastifiant liquide, étant entendu que le taux total A+B est au moins égal à 60 pce.

La dénomination "résine" est réservée dans la présente demande, par définition connue de l'homme du métier, à un composé qui est solide à température ambiante (23°C), par opposition à un agent plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine hydrocarbonée est généralement supérieure d'environ 50 à 60°C à sa valeur de Tg. Le point de ramollissement est mesuré selon la norme ISO 4625 (méthode «Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes :
- solvant d'élution : le tétrahydrofurane,
- température 35°C ;
- concentration 1 g/litre ;
- débit : 1 ml/min ;
- volume injecté : 100 µl ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 25°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène ou les mélanges de ces résines.

Parmi les résines de copolymères ci-dessus, on peut citer plus particulièrement les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, ou les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le métaméthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, ou les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

Selon l'un quelconque des modes de réalisation de l'invention, la résine est préférentiellement une résine terpénique telle qu'un homopolymère ou un copolymère de limonène, ou bien un copolymère de coupe C5 et de coupe C9.

L'agent plastifiant liquide présente préférentiellement une température de transition vitreuse inférieure à -20°C, plus préférentiellement inférieure à -40°C.

A titre d'agent plastifiant liquide, toute huile d'extension, qu'elle soit de nature aromatique ou non-aromatique, tout plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement comme agents plastifiants liquides les huiles naphténiques, les huiles paraffiniques, les huiles DAE, les huiles MES (*Medium Extracted Solvates*)*,* les huiles TDAE (*Treated Distillate Aromatic Extracts*)*,* les huiles RAE (*Residual Aromatic Extract oils*), les huiles TRAE (*Treated Residual Aromatic Extract*) et les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés.

Selon l'un quelconque des modes de réalisation de l'invention, l'agent plastifiant liquide est préférentiellement une huile végétale ou le trioléate de glycérol. Notamment convient tout particulièrement une huile végétale riche en acide oléique, c'est-à-dire que l'acide gras (ou l'ensemble des acides gras si plusieurs sont présents) dont elle dérive, comporte de l'acide oléique selon une fraction massique au moins égale à 60%, préférentiellement selon une fraction massique au moins égale à 70%, plus préférentiellement au moins égale à 80%. A titre d'huile végétale qui convient, on peut citer une huile de tournesol qui est telle que l'ensemble des acides gras dont elle dérive comprend l'acide oléique selon une fraction massique égale ou supérieure à 60%, de préférence à 70% et, selon un mode particulièrement avantageux de réalisation de l'invention, selon une fraction massique égale ou supérieure à 80%. Lorsque l'ensemble des acides gras dont elle dérive comprend de l'acide oléique selon une fraction massique supérieure à 80%, l'huile de tournesol est dite huile de tournesol oléique.

Alternativement à l'huile végétale, on peut utiliser comme agent plastifiant liquide le trioléate de glycérol, triester d'acide gras qui est généralement contenu dans l'huile de tournesol.

Selon l'un quelconque des modes de réalisation de l'invention, le taux total A+B de résine hydrocarbonée et d'agent plastifiant liquide est préférentiellement compris dans un domaine allant de 60 à 90 pce, plus préférentiellement compris dans un domaine allant de 60 à 80 pce

Selon un mode de réalisation préférentiel de l'invention, le taux A de résine hydrocarbonée est compris dans un domaine allant de 35 à 60 pce et le taux B de d'agent plastifiant liquide est compris dans un domaine allant de 0 à 35 pce. Plus préférentiellement A est supérieur à 40 pce et inférieur ou égal à 60 pce et B est compris dans un domaine allant de 0 à 30 pce.

Selon un autre mode de réalisation préférentiel de l'invention, le taux d'agent plastifiant liquide est compris entre 15 et 30 pce.

Selon un mode de réalisation particulier de l'invention, le rapport de A sur B est supérieur à 1, de préférence supérieur ou égal à 2.

Selon un autre mode de réalisation particulier de l'invention, le rapport massique de (A+B) sur la masse de charge inorganique renforçante, notamment de silice, est compris dans un domaine allant de 40 à 60%, de préférence de 50 à 60%.

### 1-4. Additifs divers :

Les compositions de caoutchouc des bandes de roulement des pneumatiques conformes à l'invention peuvent comporter également tout ou partie des additifs usuels habituellement utilisés dans les compositions d'élastomères destinées à la fabrication de bandes de roulement de pneumatiques, notamment pneumatiques, des charges autres que celles précitées, par exemple des charges non renforçantes comme la craie ou bien des charges lamellaires comme le kaolin, le talc, des pigments, des agents de protection tels que cires anti-ozone, anti-ozonants chimiques, anti-oxydants, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs ou retardateurs de vulcanisation, des activateurs de vulcanisation.

Ces compositions peuvent également contenir des activateurs de couplage lorsqu'un agent de couplage est utilisé, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru ; ces agents sont par exemple des silanes hydrolysables tels que des alkyl-alkoxysilanes, des polyols, des polyéthers, des amines, des polyorganosiloxanes hydroxylés ou hydrolysables.

### 1-5. Préparation des compositions de caoutchouc :

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) le premier élastomère diénique, la silice, l'agent de couplage, le système plastifiant, jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques, le système plastifiant, la charge inorganique renforçante et l'agent de couplage), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement de pneumatique, notamment pour véhicule tourisme.

L'invention concerne les bandes de roulement précédemment décrits tant à l'état cru (c'est à dire, avant cuisson) qu'à l'état cuit (c'est à dire, après réticulation ou vulcanisation).

L'invention concerne aussi un procédé pour préparer la bande de roulement conforme à l'invention, lequel procédé comprend les étapes suivantes :
- malaxer thermomécaniquement le premier élastomère diénique, la silice, l'agent de couplage, le système plastifiant, jusqu'à atteindre une température maximale comprise entre 110°C et 190°C;
- refroidir l'ensemble à une température inférieure à 100°C ;
- incorporer ensuite, au cours d'une seconde étape, un système de réticulation ;
- malaxer le tout jusqu'à une température maximale inférieure à 110°C ;
- calandrer ou extrudrer la composition ainsi obtenue.

L'invention concerne également les pneumatiques qui comportent une bande de roulement précédemment décrite.

L'invention s'applique également aux cas où les compositions de caoutchouc précédemment décrites forment une partie seulement de bandes de roulement du type composites ou hybrides, notamment celles constituées de deux couches radialement superposées de formulations différentes (structure dite *"cap-base"*), toutes deux sculptées et destinées à entrer en contact avec la route lors du roulage du pneumatique, au cours de la vie de ce dernier. La partie à base de la formulation précédemment décrite pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

### II- EXEMPLES DE REALISATION DE L'INVENTION

### II.1 - Préparation des compositions C1, C2, C3 et C4 :

Les formulations (en pce) des compositions C1, C2, C3 et C4 sont décrites dans le tableau I. La composition C1, conforme à l'invention, se caractérise par une matrice élastomère qui comprend plus de 50% en masse d'un SBR qui porte une fonction silanol et une fonction amine, notamment tertiaire, lesquelles fonctions sont positionnées en dehors des extrémités de la chaîne élastomère. La composition C1 contient aussi 130 pce de silice, 23 pce d'huile de tournesol oléique et 47 pce de résine polylimonène. Dans cette composition le taux A + B est égal à 70 pce, supérieur à 45 pce.

La composition C2, non conforme à l'invention, se différencie de C1 uniquement par la nature de l'élastomère qui constitue la matrice élastomère. La matrice élastomère de la composition C2 comprend plus de 50% en masse d'un élastomère portant une fonction silanol en extrémité de la chaîne élastomère.

Les compositions C3 et C4 sont non conformes à l'invention, car le taux de charge est de 110 pce dans C3 et C4 et l'élastomère porte une fonction silanol en extrémité de chaîne dans C4.

On procède pour la fabrication de ces compositions de la manière suivante : on introduit dans un mélangeur interne (taux de remplissage final : environ 70% en volume), dont la température initiale de cuve est d'environ 60°C, successivement les élastomères, la silice, l'agent de couplage, les plastifiants ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les propriétés des compositions C1 et C2 après cuisson figurent dans le tableau II.

### II.2 - Résultats :

Les résultats figurent dans le tableau II.
Les propriétés dynamiques tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à 0°C ou à 100°C.
Pour les mesures à 100°C, on effectue un balayage en amplitude de déformation de 0 à 50% (cycle aller), puis de 50% à 0% (cycle retour). Pour le cycle retour, on mesure la valeur maximale de tan(δ) observée, tan(δ)ₘₐₓ. Plus la valeur de tan(δ)ₘₐₓ à 100°C est élevée, meilleure est l'adhérence du pneumatique sur sol sec.
Pour les mesures à 0°C, on effectue un balayage en amplitude de déformation sous contrainte constante à 0.7MPa. Plus la valeur de tan(δ) à 0°C est élevée, meilleure est l'adhérence du pneumatique sur sol mouillé.

Les résultats montrent que la composition C1 conforme à l'invention présente un compromis amélioré de performance entre adhérence sur sol mouillé et sur sol sec, comparativement à la composition C2 non conforme à l'invention. En effet la composition C1 présente des valeurs de tanδ à 0°C et à 100°C toutes les deux supérieures à celles de la composition C2.

On observe que l'amélioration de ce compromis ne peut pas être obtenue si la combinaison basée sur le choix d'un élastomère fonctionnel spécifique et d'un taux de charge spécifique associé à un système plastifiant n'est pas conforme à l'invention. En effet on constate qu'à un taux de charge non conforme à l'invention, en l'espèce 110 pce, à la fois les valeurs tanδ à 0°C et à 100°Cde la composition C3 sont nettement inférieures à celles de la composition C1. On fait également le même constat pour la composition C4 non conforme à l'invention. On remarque même que la composition C3 est moins intéressante que la composition C4 du point de vue du compromis de performance entre adhérence sur sol mouillé et sur sol sec, les valeurs de tanδ à 0°C et à 100°C étant inférieures à celles de la composition C4. L'amélioration du compromis de performance entre l'adhérence sur sol mouillé et l'adhérence sur sol sec est rendu possible par le choix judicieux de l'élastomère fonctionnel et du taux de silice associé à un système plastifiant. Un tel résultat est inattendu.

**Tableau I**

| Composition n° : | C1 conforme | C2 non conforme | C3 Non conforme | C4 Non conforme |
|---|---|---|---|---|
| SBR1 (1) | 100 | - | 100 | - |
| SBR2 (2) | - | 100 | - | 100 |
| Noir de carbone (3) | 3 | 3 | 3 | 3 |
| Silice (4) | 130 | 130 | 110 | 110 |
| Agent de couplage (5) | 10 | 10 | 10 | 10 |
| Plastifiant liquide (6) | 23 | 23 | 37 | 37 |
| Résine (7) | 47 | 47 | 20 | 20 |
| Acide stéarique | 3 | 3 | 3 | 3 |
| Cire anti-ozone | 2 | 2 | 2 | 2 |
| Antioxydant (8) | 3 | 3 | 3 | 3 |
| DPG (9) | 2 | 2 | 2 | 2 |
| ZnO | 1 | 1 | 1 | 1 |
| Accélérateur (10) | 2 | 2 | 2 | 2 |
| Soufre | 1 | 1 | 1 | 1 |

| | | | | |
|---|---|---|---|---|
| (1) SBR1 : SBR avec 27% de motif styrène et 24% de motif 1,2 de la partie butadiénique (Tg = -48°C) porteur d'une fonction silanol et d'une fonction pendante amine tertiaire, lesquelles fonctions sont situées pour la majorité pondérale des chaînes élastomères (plus de 50% en masse de la masse d'élastomère) en dehors des extrémités de la chaîne élastomère ; (2) SBR avec 27% de motif styrène et 24% de motif 1,2 de la partie butadiénique (Tg = -48°C) porteur d'une fonction silanol en extrémité de la chaîne élastomère (3) Grade ASTM N234 (société Cabot) ; (4) Silice « Zeosil 1165 MP » de la société Rhodia type « HDS » (5) TESPT (« Si69 » de la société Degussa) ; (6) Huile de tournesol à 85 % en poids d'acide oléique, « Lubrirob Tod 1880 » de la société Novance (7) Résine C5/C9 ECR-373 de la société Exxon ; (8) N-(1,3-diméthylbutyl)-N'-phényl-p-phénylènediamine, de la société Flexsys (9) Diphénylguanidine (« Perkacit » DPG de la société Flexsys) ; (10)N-cylohexyl-2-benzothiazol-sulfénamide (« Santocure CBS » de la société Flexsys). | | | | |

**Tableau II**

| *Composition n° :* | *C1* | *C2* | *C3* | *C4* |
|---|---|---|---|---|
| *tanδ à 0°C* | *0.728* | *0.705* | *0.333* | *0.354* |
| *tanδₘₐₓ à 100°C* | *0.168* | *0.164* | *0.155* | *0.156* |

## Revendications

1. Bande de roulement de pneumatique qui comporte une composition de caoutchouc à base d'au moins :
- une matrice élastomère comprenant plus de 50% en masse d'un premier élastomère diénique qui porte une fonction silanol et une fonction amine pendante,
- une silice présente à un taux compris entre 120 et 140 pce ;
- un agent de couplage ;
- un système plastifiant comprenant :
- comprenant selon une teneur A allant de 5 à 60 pce une résine hydrocarbonée présentant une Tg supérieure à 20°C;
- selon une teneur B allant de 0 à 60 pce un agent plastifiant liquide ;
- étant entendu que le taux total A+B est au moins égal à 60 pce, de préférence allant de 60 à 90 pce.

2. Bande de roulement selon la revendication 1, dans laquelle la fonction silanol et la fonction amine pendante sont situées en dehors des extrémités de chaîne du premier élastomère diénique.

3. Bande de roulement selon la revendication 1 ou 2, dans laquelle le premier élastomère diénique est un élastomère diénique susceptible d'être obtenu par une réaction de couplage avec un agent de couplage portant une fonction alcoxysilane et une fonction amine, suivie d'une hydrolyse de la fonction alcoxysilane en fonction silanol.

4. Bande de roulement selon l'une quelconque des revendications 1 à 3, dans laquelle le premier élastomère diénique est un SBR, préférentiellement un SBR solution.

5. Bande de roulement selon la revendication 4 dans laquelle le copolymère de diène et de vinylaromatique présente une température de transition vitreuse comprise entre -55°C et -40°C.

6. Bande de roulement selon l'une quelconque des revendications 1 à 5, dans laquelle la fonction amine est une fonction amine tertiaire.

7. Bande de roulement selon l'une quelconque des revendications 1 à 6, dans laquelle la quantité de chaînes étoilées et de chaînes branchées présentes dans le premier élastomère diénique est comprise dans un domaine allant de 0% à moins de 50% en masse du poids total du premier élastomère diénique.

8. Bande de roulement selon l'une quelconque des revendications 1 à 7, dans laquelle la matrice élastomère comprend plus de 75%, préférentiellement plus de 90% en masse du premier élastomère diénique.

9. Bande de roulement selon l'une quelconque des revendications 1 à 8, dans laquelle A est compris dans un domaine allant de 35 à 60 pce et B est compris dans un domaine allant de 0 à 35 pce.

10. Bande de roulement selon l'une quelconque des revendications 1 à 9, dans laquelle le rapport de A sur B est supérieur à 1.

11. Bande de roulement selon l'une quelconque des revendications 1 à 10, dans laquelle la résine hydrocarbonée est une résine terpénique ou un copolymère de coupe C5 et de coupe C9.

12. Bande de roulement selon l'une quelconque des revendications 1 à 11, dans laquelle l'agent plastifiant est le trioléate de glycérol ou une huile végétale, préférentiellement une huile de tournesol, plus préférentiellement une huile de tournesol oléique.

13. Bande de roulement selon l'une quelconque des revendications 1 à 12, dans laquelle le rapport massique de (A+B) sur la masse de charge inorganique renforçante est compris dans un domaine allant de 40 à 60%, de préférence de 50 à 60%.

14. Pneumatique qui comporte une bande de roulement selon l'une quelconque des revendications 1 à 13.

15. Procédé pour préparer une bande de roulement selon l'une quelconque des revendications 1 à 13 qui comprend les étapes suivantes :
- malaxer thermomécaniquement le premier élastomère diénique, la silice, l'agent de couplage, le système plastifiant, jusqu'à atteindre une température maximale comprise entre 110°C et 190°C ;
- refroidir l'ensemble à une température inférieure à 100°C ;
- incorporer ensuite, au cours d'une seconde étape, un système de réticulation ;
- malaxer le tout jusqu'à une température maximale inférieure à 110°C ;
- calandrer ou extrudrer la composition ainsi obtenue.

## Patentansprüche

1. Reifenlauffläche, die eine Kautschukzusammensetzung auf Basis von mindestens:
- einer Elastomermatrix, die mehr als 50 Gew.-% eines ersten Dienelastomers mit einer Silanolfunktion und einer seitenständigen Aminfunktion umfasst,
- einer Kieselsäure in einer Menge zwischen 120 und 140 phe;
- einem Kupplungsmittel;
- einem Weichmachersystem, umfassend:
- ein Kohlenwasserstoffharz mit einer Tg von mehr als 20 °C gemäß einem Gehalt A im Bereich von 5 bis 60 phe;
- einen flüssigen Weichmacher gemäß einem Gehalt B im Bereich von 0 bis 60 phe;
- mit der Maßgabe, dass der Gesamtgehalt A+B mindestens gleich 60 phe ist und vorzugsweise im Bereich von 60 bis 90 phe liegt;
umfasst.

2. Lauffläche nach Anspruch 1, wobei sich die Silanolfunktion und die seitenständige Aminfunktion außerhalb der Kettenenden des ersten Dienelastomers befinden.

3. Lauffläche nach Anspruch 1 oder 2, wobei es sich bei dem ersten Dienelastomer um ein Dienelastomer handelt, das durch eine Kupplungsreaktion mit einem Kupplungsmittel mit einer Alkoxysilanfunktion und einer Aminfunktion und eine anschließende Hydrolyse der Alkoxysilanfunktion zu einer Silanolfunktion erhältlich ist.

4. Lauffläche nach einem der Ansprüche 1 bis 3, wobei es sich bei dem ersten Dienelastomer um einen SBR, vorzugsweise einen Lösungs-SBR, handelt.

5. Lauffläche nach Anspruch 4, wobei das Copolymer von Dien und Vinylaromat eine Glasübergangstemperatur zwischen -55 °C und -40 °C aufweist.

6. Lauffläche nach einem der Ansprüche 1 bis 5, wobei es sich bei der Aminfunktion um eine tertiäre Aminfunktion handelt.

7. Lauffläche nach einem der Ansprüche 1 bis 6, wobei die Menge von sternverzweigten Ketten und verzweigten Ketten in dem ersten Dienelastomer in einem Bereich von 0 Gew.-% bis weniger als 50 Gew.-% des Gesamtgewichts des ersten Dienelastomers liegt.

8. Lauffläche nach einem der Ansprüche 1 bis 7, wobei die Elastomermatrix mehr als 75 Gew.-%, vorzugsweise mehr als 90 Gew.-%, des ersten Dienelastomers umfasst.

9. Lauffläche nach einem der Ansprüche 1 bis 8, wobei A in einem Bereich von 35 bis 60 phe liegt und B in einem Bereich von 0 bis 35 phe liegt.

10. Lauffläche nach einem der Ansprüche 1 bis 9, wobei das Verhältnis von A zu B größer als 1 ist.

11. Lauffläche nach einem der Ansprüche 1 bis 10, wobei es sich bei dem Kohlenwasserstoffharz um ein Terpenharz oder ein Copolymer von C5-Schnitt und C9-Schnitt handelt.

12. Lauffläche nach einem der Ansprüche 1 bis 11, wobei es sich bei dem Weichmacher um Glycerintrioleat oder ein Pflanzenöl, vorzugsweise ein Sonnenblumenöl, weiter bevorzugt ein ölsäurereiches Sonnenblumenöl, handelt.

13. Lauffläche nach einem der Ansprüche 1 bis 12, wobei das Gewichtsverhältnis von (A+B) zum Gewicht von verstärkendem anorganischem Füllstoff in einem Bereich von 40 bis 60 %, vorzugsweise 50 bis 60 %, liegt.

14. Reifen, der eine Lauffläche nach einem der Ansprüche 1 bis 13 umfasst.

15. Verfahren zur Herstellung einer Lauffläche nach einem der Ansprüche 1 bis 13, bei dem man:
- das erste Dienelastomer, die Kieselsäure, das Kupplungsmittel und das Weichmachersystem thermomechanisch knetet, bis eine Höchsttemperatur zwischen 110 °C und 190 °C erreicht ist;
- das Ganze auf eine Temperatur von weniger als 100 °C abkühlt;
- dann im Lauf eines zweiten Schritts ein Vernetzungssystem einarbeitet;
- das Ganze bis zu einer Höchsttemperatur von weniger als 110 °C knetet;
- die so erhaltene Zusammensetzung extrudiert oder kalandriert.

## Claims

1. Tyre tread that comprises a rubber composition based on at least:
- an elastomer matrix comprising more than 50 wt% of a first diene elastomer bearing a silanol function and a pendent amine function,
- a silica in an amount comprised between 120 and 140 phr;
- a coupling agent;
- a plasticizer system comprising:
- according to a content A ranging from 5 to 60 phr, a hydrocarbon-containing resin having a Tg above 20°C;
- according to a content B ranging from 0 to 60 phr, a liquid plasticizer;
- it being understood that the total level A+B is at least equal to 60 phr, preferably ranging from 60 to 90 phr.

2. Tread according to Claim 1, wherein the silanol function and the pendent amine function are situated away from the chain ends of the first diene elastomer.

3. Tread according to Claim 1 or 2, wherein the first diene elastomer is a diene elastomer obtainable by a coupling reaction with a coupling agent bearing an alkoxysilane function and an amine function, followed by hydrolysis of the alkoxysilane function into a silanol function.

4. Tread according to any one of Claims 1 to 3, wherein the first diene elastomer is an SBR, preferably a solution SBR.

5. Tread according to Claim 4, wherein the copolymer of diene and vinyl aromatic has a glass transition temperature between -55°C and -40°C.

6. Tread according to any one of Claims 1 to 5, wherein the amine function is a tertiary amine function.

7. Tread according to any one of Claims 1 to 6, wherein the amount of star chains and of branched chains present in the first diene elastomer is in a range from 0 wt% to less than 50 wt% of the total weight of the first diene elastomer.

8. Tread according to any one of Claims 1 to 7, wherein the elastomer matrix comprises more than 75 wt%, preferably more than 90 wt% of the first diene elastomer.

9. Tread according to any one of Claims 1 to 8, wherein A is in a range from 35 to 60 phr and B is in a range from 0 to 35 phr.

10. Tread according to any one of Claims 1 to 9, wherein the ratio of A to B is greater than 1.

11. Tread according to any one of Claims 1 to 10, wherein the hydrocarbon-containing resin is a terpene resin or a copolymer of C5 cut and of C9 cut.

12. Tread according to any one of Claims 1 to 11, wherein the plasticizer is glycerol trioleate or a vegetable oil, preferably a sunflower oil, more preferably an oleic sunflower oil.

13. Tread according to any one of Claims 1 to 12 wherein the weight ratio of (A+B) to the weight of inorganic reinforcing filler is in a range from 40 to 60%, preferably from 50 to 60%.

14. Tyre that comprises a tread according to any one of Claims 1 to 13.

15. Method for preparing a tread according to any one of Claims 1 to 13 that comprises the following steps:
- thermomechanically kneading the first diene elastomer, silica, coupling agent, plasticizer system, until a maximum temperature between 110°C and 190°C is reached;
- cooling the whole to a temperature below 100°C;
- then, in a second step, incorporating a crosslinking system;
- kneading the whole up to a maximum temperature below 110°C;
- calendering or extruding the composition thus obtained.
